# EUROPÄISCHE PATENTSCHRIFT

(11) **EP 1 117 169 B1**
(45) Veröffentlichungstag und Bekanntmachung des Hinweises auf die Patenterteilung: **14.03.2007**
(21) Anmeldenummer: 01100469.4
(22) Anmeldetag: 09.01.2001
(51) Int. Cl.: H02K 5/128, H02K 11/04, F04D 29/58, F04D 29/62

(54) **Elektronikkühlung durch Spaltrohrdeckel**
Cooling of an electronic unit by means of the lid of the air-gap sleeve
Refroidissement d'un module électronique par le couvercle du manchon d'entrefer

(30) Priorität: 10.01.2000 DE 10000431
(43) Veröffentlichungstag der Anmeldung: 18.07.2001
(73) Patentinhaber: Pierburg GmbH, 41460 Neuss (DE)
(72) Erfinder: Schreckenberg, Stephan, 44263 Dortmund (DE); Stephan, Waldemar, 44319 Dortmund (DE)
(74) Vertreter: COHAUSZ DAWIDOWICZ HANNIG & SOZIEN

(56) Entgegenhaltungen:
- EP-A- 0 346 731
- EP-A- 0 913 910
- DE-A- 2 048 467
- FR-A- 1 407 672
- FR-A- 1 531 555
- US-A- 3 220 350

## Beschreibung

Die Erfindung betrifft einen drehzahlgeregelten Spaltrohrmotor für Kreiselpumpen in Heiz- und/oder Kühlkreisläufen, der eine Laufradkammer, eine in einem Elektronikmodul angeordnete Leistungselektronik und ein zwischen dem Stator und dem Rotor angeordnetes beidseitig offenes Spaltrohr aufweist, wobei das Spaltrohr den das Fördermedium führenden hydraulischen Raum vom elektrischen Antriebsraum trennt, die der Laufradkammer abgewandte Stirnseite des Spaltrohres mit einem aufsetzbaren Spaltrohrdeckel dichtend verschlossen ist, und das Elektronikmodul in Wärmekontakt auf der Rückseite des Spaltrohrdeckels aufgebracht ist.

Derartige Spaltrohrmotorpumpen sind seit langem hinlänglich bekannt. Sie werden mit Leistungen von wenigen Watt bis zu einigen 100 Watt von Synchron - oder von Asynchronmotoren und in neuerer Zeit bekanntermaßen von elektronisch kommutierten Gleichstrommotoren betrieben. Um die Drehzahl der Motoren einzustellen oder zu regeln werden Frequenzumrichter mit Leistungstransistoren eingesetzt, die wegen ihrer starken Wärmeerzeugung einer besonderen Kühlung bedürfen. Dabei sind zur Kühlung der Leistungselektronik verschiedene Prinzipien bekannt.

Beispielsweise kann die Leistungselektronik an exponierter Stelle angebracht und mit Kühlflächen versehen werden, um eine Kühlung durch die Umgebungsluft zu erreichen. Diese Art der Kühlung ist insbesondere bei den großen Pumpen ineffektiv und kann nur begrenzt eingesetzt werden. Außerdem tragen die dazu benötigten Kühlflächen zu einer Vergrößerung des Aufbaus des Motors bei. Bei naßlaufenden Spaltrohrpumpen ist es als vorteilhaft bekannt, die Elektronik dem kühlenden Einfluß des Pumpmediums auszusetzen. Dazu wird das Fördermedium durch den Spalttopf oder über separate Leitungen an die Teile des Motorgehäuses geführt, an denen die Elektronik angebracht ist.

Nachteilig bei diesen Bauformen ist es, daß ein ausreichender Wärmefluß zwischen der Leistungselektronik und dem Fördermedium nur begrenzt gewährleistet werden kann, da der Wärmefluß von den Wandungen verschiedener Bauteile behindert wird oder die Übertragungsstrecke zu lang ist. Der Nachteil einer beschränkten Wärmeabfuhr kommt insbesondere bei den neuartigen elektrisch kommutierten Motoren zum tragen, deren miniaturisierte Leistungselektronik auf eine effiziente Kühlung angewiesen ist. Insgesamt sind diese Arten der vom Fördermedium unterstützten Kühlung aufwendig und tragen damit gerade bei kleinen Pumpen zu einer unakzeptablen Steigerung der Kosten bei.

Die EP 0 913 910 A1 zeigt einen Spaltrohrmotor für Kreiselpumpen bei dem die dem Laufrad abgewandte Seite des Spaltrohres mit einem Spaltrohrdeckel verschlossen ist, wobei ein Elektronikmodul in Wärmekontakt mit dem Spaltrohrdeckel angeordnet ist. Eine derartige Anordnung bei Tauchpumpen zeigt auch die EP 0 346 731 A2.

Die US 3 220 350 zeigt weiterhin eine Pumpe, bei der an einem Deckel zum Verschließen des Spaltrohres eine Aufnahme vorgesehen ist, in der eine Welle mittels einer Lagerbuchse montiert ist. Hierdurch kann eine Zentrierung der Welle erreicht werden.

Die vorgenannte Konstruktion ermöglicht jedoch keine passgenaue zentrische Montage von Welle, Spaltrohr und Gehäuse einer Pumpe zueinander.

Aufgabe der vorliegenden Erfindung ist es daher, einen drehzahlgeregelten Spaltrohrmotor für Pumpen zu schaffen, der bei hoher Zuverlässigkeit und bei geringen Herstellungskosten eine baulich einfach zu realisierende Möglichkeit bietet, die Ansteuerelektronik in ausreichendem Maß zu kühlen und eine einfache gegenseitige Zentrierung von Welle, Spaltrohr und Gehäuse zu erreichen.

Diese Aufgabe wird durch einen Spaltrohrmotor mit den Merkmalen des Anspruchs 1 gelöst.

Das Spaltrohr ist als einfach herzustellendes dünnwandiges Rohr ausgebildet, daß an beiden Seiten offen ist. Dieses Rohr wird einerseits dichtend auf einen Lagerschild aufgesetzt, während seine andere Seite von einem aufsetzbaren Spaltrohrdeckel dichtend verschlossen ist. Dabei dient dieser erfindungsgemäße Spaltrohrdeckel als Träger für das Abwärme erzeugende Elektronikmodul, das die Leistungselektronik beinhaltet. Der Spaltrohrdeckel, der auf seiner hydraulischen Seite vom kühlenden Fördermedium beaufschlagt wird, ist dabei so ausgebildet, daß ein guter wärmeleitender Kontakt zum Elektronikmodul besteht. So kann beispielsweise die Leistungselektronik unmittelbar auf dem Spaltrohrdeckei angeordnet sein. Wegen der kleinen Übertragungsstrecke ist ein optimaler Wärmeübergang gegeben und eine ausreichende Kühlung gewährleistet.

Durch die erfindungsgemäße Art der Kühlung ist auf baulich einfache Weise eine optimale Kühlung gegeben, so daß die maximal zulässige Temperatur der Bauteile nicht überschritten wird und diese entsprechend geschont werden. Das führt zu einer Erhöhung der Lebensdauer des Motors. Außerdem ist es vorteilhaft, daß mit der erfindungsgemäßen Kühlung ein sicherer Betrieb der Pumpe auch bei hohen Außentemperaturen, wie sie beispielsweise in Heizräumen und in Kraftfahrzeugen auftreten, möglich ist.

Insbesondere trägt die Tatsache, daß das Spaltrohr aus einem einfachen Rohr hergestellt werden kann, zu einer starken Reduzierung der Herstellungskosten des Motors bei. Dabei kann das Spaltrohr aus dünnem Blech gefertigt und zwischen Lagerschild und Spaltrohrdeckel geklemmt sein. Es ist jedoch auch möglich, das Spaltrohr aus dünnem Kunststoff zu fertigen, um eine Gewichtsersparnis und geringere Wirbel ströme zu erhalten. Der Spaltrohrdeckel selber wird vorteilhafterweise aus Metall gefertigt, um eine optimale Wärmeleitung zum kühlenden Medium und eine hohe Stabilität zu gewährleisten.

Erfindungsgemäß bildet der Spaltrohrdeckel einen Träger für das Elektronikmodul. Dabei ist es gerade im Hinblick auf eine einfache Herstellung vorteilhaft, das Elektronikmodul auf die Halterung aufzukleben, wobei der Kontakt zwischen beiden Bauteilen durch eine auf die Oberflächen aufgetragene Wärmeleitpaste verbessert werden kann. An der Stelle, an der das Elektronikmodul am Spaltrohrdeckel anliegt, könnte dessen Wandstärke reduziert sein, damit die Übertragungsstrecke weiter reduziert und damit der Kühleffekt weiter verbessert wird.

Um den Aufbau des Motors zu vereinfachen, ist der Spaltrohrdeckel an seiner dem Spaltrohr zugewandten Vorderseite mit einem zylindrischen Kragen versehen, in den das Spaltrohr eingesteckt oder auf den das Spaltrohr aufgesteckt ist. Dieser Kragen zentriert und stabilisiert das zylindrische Spaltrohr und bietet die Möglichkeit einer einfachen Abdichtung vermittels eines am Umfang anliegenden Dichtringes.

Zudem ist an der Vorderseite des Spaltrohrdeckels eine koaxiale Aufnahme vorgesehen, in der eine Lagerbuchse für eine Welle zu montieren ist. Somit bewirkt der Spaltrohrdeckel, der in gleichsam zentrierender Weise auf ein den Stator umgebendes Gehäuseteil aufgesetzt ist, die gegenseitige Zentrierung der Bauteile Spaltrohr, Welle und Gehäuse.

Um einen hohen Durchsatz an Fördermedium durch das Spaltrohr zu erreichen, ist es vorteilhaft, die Welle mit einer axialen Durchgangsbohrung zu versehen. Durch diese Bohrung wird das Medium von der Saugseite der Pumpe an den Spaltrohrdeckel befördert und beaufschlagt die Trennwand zum Elektronikmodul.

Dabei ist es vorteilhaft, radiale Kanäle in Form von Nuten vorzusehen, die das Fördermedium ausgehend von der zentralen Bohrung über die Oberfläche des Spaltrohrdeckels verteilen und damit den Durchsatz an Fördermedium und die Kühlung verbessern.

In einer konstruktiv besonders einfachen Variante weist der Motor ein insbesondere aus Kunststoff geformtes Gehäuseteil auf, das einerseits als ein Lagerschild die Laufradkammer ausbildet und das andererseits eine zylindrische Wandung aufweist, die den Stator umgibt. Gleichzeitig ist an der dem Laufrad abgewandten Seite ein Kragen angebracht, in den das zylindrische Spaltrohr eingesteckt und vermittels eines am Umfang anliegenden Dichtringes abgedichtet ist. Dieses Gehäuseteil bildet somit als einstückiges Bauteil die Basis der Spaltrohrmotorpumpe, die sämtliche anderen Komponenten trägt. In einer besonders vorteilhaften Ausführungsform ist an das Gehäuseteil zudem der Auslaßstutzen angeformt, der in der Laufradkammer mündet.

Mit dieser kompakten Bauweise ist die Spaltrohrmotorpumpe besonders einfach und kostengünstig herzustellen. So brauchen lediglich das Spaltrohr, Dichtelemente, der Stator und der Rotor mit ihrem Lager in das Gehäuseteil eingesetzt zu werden, bevor auf der Rückseite der mit der Elektronik versehene Spaltrohrdeckel dichtend aufgesetzt wird. Nach der Montage des Laufrades wird in einem letzten Schritt die Laufradkammer mit einem Gehäusedeckel verschlossen. Besonders vorteilhaft ist es dabei, den Schutzdeckel des Spaltrohr-deckels vermittels einer Rastverbindung an dem Gehäuseteil zu halten. Auf diese Weise steht eine einfache und preiswerte kleine Pumpe zur Verfügung, die besonders robust ist.

Wegen der wenigen Bauteile ist eine hohe Betriebssicherheit des erfindungsgemäßen Motors gegeben. Außerdem kann die Pumpe vorallem in axialer Richtung kompakt aufgebaut werden und findet auch bei begrenzten räumlichen Bedingungen außreichend Einbauraum. Dabei unterstützt die erfindungsgemäße Kühlung die axiale Bauweise der Pumpe und damit das Zusammenfügen in einer Richtung, was zu einer weiteren Kostensenkung bei der Montage beiträgt.

Eine solche Pumpe eignet sich besonders für den Einsatz im Kühlkreislauf von Kraftfahrzeugen.

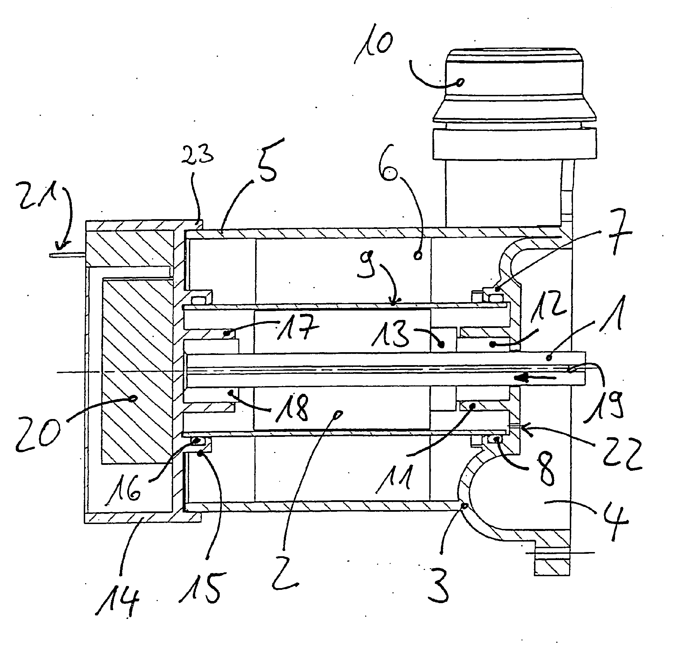

Eine besondere Ausführungsform der erfindungsgemäßen Kreiselpumpe wird im folgenden anhand der Figur näher beschrieben.

In der Figur ist ein drehzahlgesteuerter Spaltrohrmotor zum Betrieb einer Kreiselpumpe insbesondere für den Einsatz in Heiz- und/oder Kühlkreisläufen dargestellt. Dabei ist ein nicht dargestelltes Laufrad auf einer Welle 1 gehalten, die einen Rotor 2 trägt. Der Motor weist ein einstückig geformtes Gehäuseteil 3 auf, das mit einem als Lagerschild dienenden Abschnitt eine als Spiralkammer geformte Laufradkammer 4 bildet und das mit einer zylindrischen Wandung 5 den Stator 6 umgibt. Das Gehäuseteil 3 weist zudem einen zylindrischen Kragen 7 auf, in den ein Spaltrohr 9 einsteckbar und vermittels eines am Umfang anliegenden Dichtringes 8 abgedichtet ist. An das Gehäuseteil 3 ist der Auslaßstutzen 10 angeformt. Vermittels des Gehäuseteiles ist die Pumpe an einem Anschluß montierbar.

Das Gehäuseteil 3 weist zudem eine Aufnahme 11 auf in die eine die Welle 1 aufnehmende Lagerbuchse 12 zu montieren ist. Dabei dient die Lagerbuchse 12 einerseits als Radiallager und andererseits als Axiallager für einen Lagerring 13.

Auf die von der Wandung 5 gebildete rückseitige Öffnung des Gehäuseteiles 3 ist ein Spaltrohrdeckel 14 aufgesetzt. Dieser Spaltrohrdeckel 14 veschließt gleichsam das rückseitig offene Spaltrohr 9, dessen Rand in einen an den Spaltrohrdeckel 14 angeformten Kragen 15 eingesteckt ist. Das Spaltrohr 9 ist gegenüber dem elektrischen Antriebsraum des Motors mit einem Dichtring 16 abgedichtet, der in eine entsprechende in den Kragen eingelassene Nut eingelegt ist.

Die der Laufradkammer abgewandte Stirnseite des Spaltrohres ist mit einem aufsetzbaren Spaltrohrdeckel dichtend verschlossen, wobei das Elektronikmodul in Wärmekontakt auf der Rückseite des Spaltrohrdeckels 14 aufgebracht ist. Dadurch, daß Spaltrohrdeckel 14 vermittels einer nicht dargestellten Verbindung lösbar an der Wandung 5 gehalten wird, ist das zylindrische Spaltrohr 9 zwischen den den beiden Kragen 7 und 15 zentriert. Der Spaltrohrdeckel 14 ist zudem an seiner Vorderseite mit einer Aufnahme 17 versehen, in welche die Welle 1 vermittels einer Lagerbuchse 18 eingesteckt ist. Die Welle ist mit einer axialen Bohrung 19 versehen, die in Pfeilrichtung von Fördermedium durchströmt wird.

Auf der Rückseite des Spaltrohrdeckels 14 ist in unmittelbarem thermischen Kontakt ein Eiektronikmodul 20 vermittels einer Wärmeleitpaste aufgesetzt, in dem die Leistungshalbleiter untergebracht sind. Der elektrische Anschluß geschieht über einen Stecker 21. Auf diese Weise kann das Elektronikmodul 20 seine Abwärme direkt über den Boden des Spaltrohrdeckels 14 an das innerhalb des Spaltrohres 9 befindliche Pumpmedium abgeben. Damit ein ausreichender Austausch des Pumpmediums innerhalb des Spaltrohres 9 gegeben ist, sind in den vom Gehäuseteil 5 gebildeten Lagerschild Öffnungen 22 eingebracht.

## Patentansprüche

1. Drehzahlgeregelter Spaltrohrmotor für Kreiselpumpen in Heiz- und/oder Kühlkreisläufen, der eine Laufradkammer (4), eine in einem Elektronikmodul (20) angeordnete Leistungselektronik und ein zwischen dem Stator und dem Rotor angeordnetes beidseitig offenes Spaltrohr (9) aufweist, wobei das Spaltrohr den das Fördermedium führenden hydraulischen Raum vom elektrischen Antriebsraum trennt, die der Laufradkammer (4) abgewandte Stirnseite des Spaltrohres (9) mit einem aufsetzbaren Spaltrohrdeckel (14) dichtend verschlossen ist, wobei das Elektronikmodul (20) in Wärmekontakt auf der Rückseite des Spaltrohrdeckels (9) aufgebracht ist, **dadurch gekennzeichnet, daß** der Spaltrohrdeckel (14) an seiner Vorderseite eine Aufnahme (17) aufweist, in die eine Welle (1) vermittels einer Lagerbuchse (18) montiert ist und der Spaltrohrdeckel (14) an seiner Vorderseite einen zylindrischen Kragen (15) aufweist, in den das Spaltrohr (9) eingesteckt oder auf den das Spaltrohr (9) aufgesteckt ist und der Spaltrohrdeckel (14) in gleicher Weise mit einem zylindrischen Kragen (23) auf ein den Stator (6) umgebendes Gehäuseteil (5) aufgesetzt ist.

2. Spaltrohrmotor nach Anspruch 1,
**dadurch gekennzeichnet, daß** der Spaltrohrdeckel (14) aus Metall ist.

3. Spaltrohrmotor nach Anspruch 1 oder 2,
**dadurch gekennzeichnet, daß** das Elektronikmodul (20) auf den Spaltrohrdeckel (14), insbesondere vermittels Wärmeleitpaste, aufgeklebt oder aufgeschweißt ist.

4. Spaltrohrmotor nach einem der vorherigen Ansprüche,
**dadurch gekennzeichnet, daß** der Spaltrohrdeckel (14) mittels eines am Umfang des zylindrischen Kragens (15) anliegenden Dichtringes (16) abgedichtet ist.

5. Spaltrohrmotor nach einem der vorherigen Ansprüche,
**dadurch gekennzeichnet, daß** die Welle (1) eine axiale Bohrung (19) aufweist, die von Pumpmedium durchströmt ist.

6. Spaltrohrmotor nach einem der vorherigen Ansprüche, **gekennzeichnet durch** ein Gehäuseteil (3), das einerseits mit einer zylindrischen Wandung (5) den Stator (6) umgibt und das andererseits einen Lagerschild ausbildet, der die Laufradkammer (4) einseitig bedeckt und der auf seiner der Laufradkammer (4) abgewandten Seite einen zylindrischen Kragen (7) aufweist, in den das Spaltrohr (9) eingesteckt und vermittels eines am Umfang anliegenden Dichtringes (8) abgedichtet ist.

7. Spaltrohrmotor nach Anspruch 6,
**dadurch gekennzeichnet, daß** das Lagerschild eine Halbschale der Laufradkammer (4) bildet.

8. Spaltrohrmotor nach Anspruch 6 oder 7,
**dadurch gekennzeichnet, daß** an das Gehäuseteil (3) ein Auslaßstutzen (10) angeformt ist.

9. Spaltrohrmotor nach einem der vorherigen Ansprüche,
**dadurch gekennzeichnet, daß** der Spaltrohrdeckel (14) lösbar auf das Gehäuseteil (3) aufgesetzt ist.

## Claims

1. Speed controlled motor with air gap sleeve for centrifugal pumps in heating and/or cooling circuits, which has an impeller chamber (4), power electronics arranged in an electronics module (20) and an air gap sleeve (9) open on both sides arranged between the stator and the rotor, in which the air gap sleeve separates the hydraulic area carrying the pumping medium from the electrical drive area and the face of the air gap sleeve (9) facing away from the impeller chamber (4) is closed in a sealed way with an attachable lid of the air gap sleeve (14), in which the electronics module (20) is brought into contact with heat on the back of the lid of the air gap sleeve (9), **characterised in that** the lid of the air gap sleeve (14) has a receiver (17), into which a shaft (1) is fitted by means of a bearing bush (18) and the lid of the air gap sleeve (14) has a cylindrical collar (15) on the front, into which the air gap sleeve (9) is inserted or to which the air gap sleeve (9) is attached and the lid of the air gap sleeve (14) is attached to a part of the housing (5) surrounding the stator (6) with a cylindrical collar in the same way.

2. Air gap sleeve according to claim 2,
**characterised in that** the lid of the air gap sleeve (14) is made of metal.

3. Air gap sleeve according to claim 1 or 2,
**characterised in that** the electronics module (20) is stuck or welded to the lid of the air gap sleeve (14), particularly by means of heat conducting paste.

4. Air gap sleeve according to one of the previous claims,
**characterised in that** the lid of the air gap sleeve (14) is sealed by means of a sealing ring (16) on the circumference of the cylindrical collar (15).

5. Air gap sleeve according to one of the previous claims,
**characterised in that** the shaft (1) has an axial hole (19), through which the pump medium flows.

6. Air gap sleeve according to one of the previous claims,
**characterised by** a part of the housing (3), which surrounds the stator (6) with a cylindrical wall (5) on the one hand and on the other hand forms a bearing plate, which covers the impeller chamber (4) on one side and has a cylindrical collar (7) on the side facing away from the impeller chamber (4), into which the air gap sleeve (9) is inserted and sealed by means of a sealing ring (8) on the circumference.

7. Air gap sleeve according to claim 6,
**characterised in that** the bearing plate forms a half shell of the impeller chamber (4).

8. Air gap sleeve according to claim 6 or 7,
**characterised in that** an outlet pipe (10) is formed on the part of the housing (3).

9. Air gap sleeve according to one of the previous claims,
**characterised in that** the lid of the air gap sleeve (14) can be attached to the part of the housing (3) in a detachable way.

## Revendications

1. Moteur à gaine avec régime réglable pour pompes centrifuges en circuits de chauffage et/ou de refroidissement, qui présente une chambre de roue mobile (4), une électronique de puissance agencée dans un module électronique (20) et une gaine (9) ouverte des deux côtés, agencée entre le stator et le rotor, dans lequel la gaine, qui est fermée de manière étanche sur la face terminale de la gaine (9) opposée à la chambre de roue mobile (4) au moyen d'un chapeau de gaine (14) démontable, sépare l'espace hydraulique conduisant le fluide véhiculé de l'espace moteur électrique, le module électronique (20) étant appliqué en contact thermique sur la face arrière du chapeau de gaine (9), **caractérisé en ce que** le chapeau de gaine (14) présente, au niveau de sa face avant, un logement (17), dans lequel un arbre (1) est monté au moyen d'une douille de palier (18) et le chapeau de gaine (14) présente, au niveau de sa face avant, une collerette cylindrique (15), dans laquelle la gaine (9) est enfichée ou sur laquelle la gaine (9) est embrochée et le chapeau de gaine (14) est posé de la même manière sur une partie de boîtier (5) entourant le stator (6) avec une collerette cylindrique (23).

2. Moteur à gaine selon la revendication 1, **caractérisé en ce que** le chapeau de gaine (14) est en métal.

3. Moteur à gaine selon l'une quelconque des revendications 1 ou 2, **caractérisé en ce que** le module électronique (20) est collé ou soudé sur le chapeau de gaine (14), en particulier au moyen de pâte thermoconductrice.

4. Moteur à gaine selon l'une quelconque des revendications précédentes, **caractérisé en ce que** le chapeau de gaine (14) est étanchéifié au moyen d'une bague d'étanchéité (16) ajustée sur la périphérie de la collerette cylindrique (15).

5. Moteur à gaine selon l'une quelconque des revendications précédentes, **caractérisé en ce que** l'arbre (1) présente un alésage axial (19), qui est traversé par du fluide de pompage.

6. Moteur à gaine selon l'une quelconque des revendications précédentes, **caractérisé par** une partie de boîtier (3), qui entoure, d'une part, le stator (6) avec une paroi cylindrique (5) et qui forme, d'autre part, une flasque, qui recouvre d'un côté la chambre de roue mobile (4) et qui présente, sur sa face opposée à la chambre de roue mobile (4), une collerette cylindrique (7), dans laquelle la gaine (9) est enfichée et étanchéifiée au moyen d'une bague d'étanchéité (8) ajustée sur la périphérie.

7. Moteur à gaine selon la revendication 6, **caractérisé en ce que** la flasque forme une demi-coque de la chambre de roue mobile (4).

8. Moteur à gaine selon l'une quelconque des revendications 6 ou 7, **caractérisé en ce qu'**une tubulure d'échappement (10) est formée sur la partie de boîtier (3).

9. Moteur à gaine selon l'une quelconque des revendications précédentes, **caractérisé en ce que** le chapeau de gaine (14) est posé de manière amovible sur la partie de boîtier (3).
